# EUROPEAN PATENT SPECIFICATION

(11) **EP 2 445 050 B1**
(45) Date of publication and mention of the grant of the patent: **10.09.2014**
(21) Application number: 10789288.7
(22) Date of filing: 30.03.2010
(51) Int. Cl.: H01M 10/0562, H01M 10/052

(54) **ELECTRICITY-GENERATING ELEMENT AND NONAQUEOUS-ELECTROLYTE BATTERY USING THE SAME**
ELEMENT ZUR ERZEUGUNG VON ELEKTRIZITÄT UND DIESES ENTHALTENDE BATTERIE MIT WASSERFREIEM ELEKTROLYT
ÉLÉMENT PRODUCTEUR D'ÉLECTRICITÉ ET BATTERIE À ÉLECTROLYTE NON AQUEUX L'UTILISANT

(30) Priority: 19.06.2009 JP 2009146875
(43) Date of publication of application: 25.04.2012
(73) Proprietor: Sumitomo Electric Industries, Ltd., Chuo-ku Osaka-shi Osaka 540-0041 (JP)
(72) Inventor: OTA, Nobuhiro, Itami-shi, Hyogo 664-0016 (JP); UEMURA, Takashi, Itami-shi, Hyogo 664-0016 (JP)
(74) Representative: Boult Wade Tennant
(86) International application number: PCT/JP2010/055749
(87) International publication number: WO 2010/146911

(56) References cited:
- EP-A1- 1 365 470
- EP-A2- 1 890 356
- WO-A1-2008/072685
- JP-A- 2001 143 690
- JP-A- 2002 329 524
- JP-A- 2004 220 906
- JP-A- 2004 220 906
- US-A1- 2009 029 265

## Description

### Technical Field

The present invention relates to an electric power generating element which has excellent cycle characteristics and which can be produced in satisfactory yield, and to a nonaqueous electrolyte battery including the electric power generating element.

### Background Art

In recent years, nonaqueous electrolyte batteries, which are charged and discharged by moving lithium ions between positive electrode layers and negative electrode layers, have been receiving attention. It has been reported that in such batteries, sulfide-based solid electrolytes, such as Li₂S-P₂S₅-based electrolytes, with high Li-ion conductivity are used for electrolyte layers arranged between positive electrode layers and negative electrode layers.

However, sulfide-based solid electrolytes have disadvantages that they are electrochemically unstable to metallic Li deposited at interfaces between solid electrolyte layers and negative electrode layers during battery charge and thus are easily decomposed. So, an attempt has been made to incorporate oxygen (O) into a sulfide-based solid electrolyte to improve electrochemical stability to metallic Li. Furthermore, the applicant has developed a battery structure (electric power generating element) by improving an O-containing sulfide-based solid electrolyte layer, the battery structure having a higher capacity and excellent cycle characteristics in which the capacity is less likely to decrease even after repeated charging and discharging (see Patent Literature 1).

### Citation List

### Patent Literature

PTL 1: Japanese Unexamined Patent Application Publication No. 2008-152925

### Summary of Invention

### Technical Problem

However, the inventors have conducted further studies and have found that the battery described in PTL 1 have room for improvement in terms of the yield of the battery. The term "yield of the battery" used here indicates in a plurality of batteries produced, the proportion of batteries that maintain a certain discharge capacity after a predetermined number of charge-discharge operations.

Specifically, the electric power generating element disclosed in PTL 1 will be described. The electric power generating element is designed on the basis of the following two findings:
"a higher oxygen content reduces the Li-ion conductivity of the solid electrolyte layer", and
"a higher oxygen content improves the electrochemical stability of the solid electrolyte layer to metallic Li of the negative electrode layer".

In view of the foregoing findings, the solid electrolyte layer described in PTL 1 is designed so as to have one of the following three configurations based on the technical ideas that on the negative electrode layer side, a higher O content improves the stability to metallic Li and that the O content of the solid electrolyte layer is minimized as a whole:
(A) the solid electrolyte layer is divided into two sections, i.e., a positive electrode layer side and a negative electrode layer side, and the O content of the positive electrode layer side < the O content of the negative electrode layer side;
(B) the solid electrolyte layer is divided into three sections, i.e., a positive electrode layer side, a negative electrode layer side, and an intermediate section, and the O content of the intermediate section < the O content of the positive electrode layer side < the O content of the negative electrode layer side; and
(C) the solid electrolyte layer is divided into three sections, i.e., a positive electrode layer side, a negative electrode layer side, and an intermediate section, and the O content of the intermediate section < the O content of the negative electrode layer side < the O content of the positive electrode layer side.

In configuration (A), the Li-ion conductivity is reduced from the positive electrode layer side to the negative electrode layer side. In each of configurations (B) and (C), the Li-ion conductivity is reduced from the intermediate section to the negative electrode layer side. Figuratively speaking, each of the configurations is like a road in which the number of lanes decreases with decreasing distance from an exit. As with a traffic congestion caused at the exit, the Li-ion concentration is increased on the negative electrode layer side of the solid electrolyte layer during charging the battery. At this time, if the Li-ion conductivity is nonuniform in a portion of the solid electrolyte layer in the vicinity of the interface between the solid electrolyte layer and the negative electrode layer, Li ions are easily concentrated at a portion having a high Li-ion conductivity. Usually, Li ions transferred to the negative electrode layer side during charging the battery are likely to be deposited at the interface in the form of metallic Li. The concentration of Li ions causes the uneven distribution of the deposited metallic Li at the interface. If the battery is discharged in this condition, the deposited metallic Li is dissolved to form Li ions and transferred to the positive electrode layer side. When the metallic Li is unevenly distributed, Li ions are mainly transferred from portions where the metallic Li is unevenly distributed. Thus, the electrode area is substantially reduced. That is, charge-discharge operations using the entire surface of the electrode layer cannot be performed. Hence, the capacity is reduced as the number of charge-discharge cycles is increased. In other words, although the electric power generating element described in PTL 1 has a high discharge capacity and excellent cycle characteristics, the yield is likely to depend on the performance of the solid electrolyte layer on the negative electrode layer side.

The present invention has been accomplished in light of the circumstances described above. It is an object of the present invention to provide an electric power generating element which has excellent cycle characteristics and which can be produced in satisfactory yield, and a nonaqueous electrolyte battery including the electric power generating element.

### Solution to Problem

(1) The invention provides an electric power generating element for a non-aqueous electrolyte battery as set out in claim 1.

In the electric power generating element having the foregoing structure, minor variations in the property of the solid electrolyte layer are permissible. Most of the electric power generating elements provide stable cycle characteristics. That is, the electric power generating elements are produced in satisfactory yield. The reason for this is that as described in the subsequent paragraph, Li ions are less likely to be locally distributed in the vicinity of the interface between the solid electrolyte layer and the negative electrode layer of the electric power generating element during charging.

As described above, in a Li.P.S.O-based solid electrolyte layer, a higher O content has a tendency to cause a reduction in Li-ion conductivity. Thus, for the configuration described above, when Li ions are transferred from the positive electrode layer to the negative electrode layer through the solid electrolyte layer during charging the battery, the conduction of Li ions is limited on the positive electrode layer side. Furthermore, the Li-ion conductivity in the solid electrolyte layer is gradually increased with decreasing distance from the negative electrode layer. Thus, Li ions are uniformly dispersed in the solid electrolyte layer and transferred, thereby resulting in a relatively uniform Li-ion distribution in the vicinity of the interface between the solid electrolyte layer and the negative electrode layer. Hence, even if the solid electrolyte layer at the interface has variations in Li-ion conductivity, a local concentration of a large number of Li ions does not occur. In the case where the relationship between the solid electrolyte layer and Li ions is compared to the relationship between an expressway and vehicles, the solid electrolyte layer is like an expressway in which the number of entrances is small and the number of lanes is gradually increased. Vehicles (i.e., Li ions) do not cause traffic congestion on the exit side because a traffic flow is regulated by the entrances. Following the same logic as above, Li ions are prevented from being localized at the interface.

Furthermore, the portion of the solid electrolyte layer adjacent to the negative electrode layer has an O content of 3 atomic percent or more. This contributes to improvement in the yield of the electric power generating element. Moreover, the limitation of the O content sufficiently ensures the electrochemical stability of the solid electrolyte layer to metallic Li contained in the negative electrode layer and maintains the Li-ion conductivity at a high level.

(2) In the electric power generating element according to an embodiment of the present invention, a portion of the solid electrolyte layer in the vicinity of the interface between the positive electrode layer and the solid electrolyte layer preferably has an O content of 30 atomic percent or less.

The O content is specified as described above, thereby improving the yield of the electric power generating element. Furthermore, sufficient Li-ion conductivity in the solid electrolyte layer can be ensured, thereby resulting in the electric power generating element having a discharge capacity adequate for various applications.

(3) In the electric power generating element according to an embodiment of the present invention, a portion of the solid electrolyte layer in the vicinity of the interface between the positive electrode layer and the solid electrolyte layer preferably has an O content of 15 atomic percent or less.

The limitation of the O content of the solid electrolyte layer adjacent to the positive electrode layer improves the yield of the electric power generating element. In addition, it is possible to improve the Li-ion conductivity in the solid electrolyte layer. Furthermore, when a battery including the electric power generating element is produced, the battery has a higher discharge capacity.

(4) In the electric power generating element according to an embodiment of the present invention, the Li, P, and S concentrations in the solid electrolyte layer are preferably set as follows:
the Li concentration is in the range of 20 to 52 atomic percent;
the P concentration is in the range of 10 to 20 atomic percent; and
the S concentration is in the range of 30 to 56 atomic percent.

The proportions of the foregoing elements in the solid electrolyte layer are specified, thereby improving the Li-ion conductivity and the transport number of Li ions in the solid electrolyte layer.

(5) In the electric power generating element according to an embodiment of the present invention, main peaks in the X-ray diffraction pattern of the solid electrolyte layer using Cu-Kα radiation may be located at 16.7±0.25°, 20.4±0.25°, 23.8±0.25°, 25.9±0.25°, 29.4±0.25°, 30.4±0.25°, 31.7±0.25°, 33.5±0.25°, 41.5±0.25°, 43.7±0.25°, and 51.2±0.25° in terms of 2θ, and each of the peaks may have a half-width of 0.5° or less.

The solid electrolyte layer that exhibits the peaks described above is crystalline. The crystalline solid electrolyte layer tends to have Li-ion conductivity superior to that of an amorphous solid electrolyte layer. The electric power generating element including the solid electrolyte layer that exhibits the peaks described above has a high discharge capacity.

(6) In the electric power generating element according to an embodiment of the present invention, main peaks in the X-ray diffraction pattern of the solid electrolyte layer using Cu-Kα radiation may be located at about 11° and about 30° in terms of 2θ, and each of the peaks may have a half-width of 10° or less.

The solid electrolyte that exhibits the peaks described above has a weak crystal structure intermediate between a crystal structure and an amorphous structure. The amorphous solid electrolyte tends to have slightly higher resistance to stress than that of the crystalline solid electrolyte. Thus, it is less likely to be damaged by the stress resulting from a change in the volume of the positive electrode layer or the negative electrode layer during charging or discharging the battery. Hence, the electric power generating element including the solid electrolyte layer which exhibits the foregoing peaks and which has a weak crystal structure tends to have excellent cycle characteristics.

(7) In the electric power generating element according to an embodiment of the present invention, the solid electrolyte layer may be amorphous, and the X-ray diffraction pattern of the solid electrolyte layer using Cu-Kα radiation may not show any clear peak.

The electric power generating element including the amorphous solid electrolyte layer that does not exhibit the foregoing peaks tends to have excellent cycle characteristics.

(8) A nonaqueous electrolyte battery embodying the present invention includes the electric power generating element described above.

The battery including the electric power generating element embodying the present invention has a high discharge capacity and excellent cycle characteristics. The battery can be used for various applications, for example, power supplies used in portable devices. Furthermore, a stacked-cell battery in which the plural electric power generating elements embodying the present invention are laminated may be produced.

### Advantageous Effects of Embodiments of the Invention

The electric power generating element according to embodiments of the present invention has excellent cycle characteristics and thus can be suitably used as an electric power generating element for use in a nonaqueous electrolyte battery. Furthermore, the electric power generating element embodying the present invention is produced in high yield, thus reducing the loss of materials for producing the battery. Brief Description of Drawings

[Figure 1] Figure 1 is an X-ray diffraction pattern of a solid electrolyte layer included in an electric power generating element of sample 29, the X-ray diffraction pattern indicating that the solid electrolyte layer is crystalline.
[Figure 2] Figure 2 is an X-ray diffraction pattern of a solid electrolyte layer included in an electric power generating element of sample 31, the X-ray diffraction pattern indicating that the solid electrolyte layer has a crystal structure intermediate between a crystalline structure and an amorphous structure.

### Description of Embodiments

Embodiments of an electric power generating element will be described below.

The electric power generating element includes a positive electrode layer, a negative electrode layer, and a solid electrolyte layer arranged between both the electrode layers. Among these layers, the solid electrolyte layer has a characteristic composition. Hereinafter, first, the positive electrode layer and the negative electrode layer will be briefly described. Then the solid electrolyte layer, which is the feature of the electric power generating element, will be described in detail.

### (Positive Electrode Layer)

The positive electrode layer contains a positive-electrode active material that is capable of intercalating and deintercalating Li ions and a solid electrolyte that serves as a medium for conducting Li ions in the positive electrode layer. As the positive-electrode active material, a material represented by the chemical formula LiαO₂ or Liβ₂O₄ (wherein each of α and β represents at least one of Co, Mn, and Ni) is suitable. Specific examples thereof include LiCoO₂, LiNiO₂, LiaMnO₂, and LiMn₂O₄. In addition, as a material containing an element other than Co, Mn, or Ni, for example, LiCo_{0.5}Fe_{0.5}O₂ may be used.

Furthermore, a current collector may be formed on a side of the positive electrode layer (opposite the side adjacent to the solid electrolyte layer). As the current collector, for example, one selected from Al, Ni, alloys thereof, and stainless steel may be suitably used.

### (Negative Electrode Layer)

The negative electrode layer contains a negative-electrode active material that is capable of intercalating and deintercalating Li ions. As the negative-electrode active material, metallic Li or a Li alloy may be used. Examples of an element that can form an alloy with Li include Si, Al, Ga, Ge, In, Sn, Tl, and Pb.

Furthermore, a current collector may be formed on a side of the negative electrode layer (opposite the side adjacent to the solid electrolyte layer). However, if the negative-electrode active material itself has a high conductivity, the current collector for the negative electrode layer may be omitted.

### (Solid Electrolyte Layer)

The solid electrolyte layer contains Li, P, S, and O. The O content of the solid electrolyte layer is set so as to be reduced stepwise or continuously from the positive electrode layer side to the negative electrode layer side. The solid electrolyte layer may consist of the foregoing four elements, excluding incidental impurities. Alternatively, another element may be intentionally added in addition to the foregoing four elements. In both cases, the O content is set so as to be reduced from the positive electrode layer side to the negative electrode layer side.

Preferred proportions of the four elements contained in the solid electrolyte layer are described below.
* The Li concentration in the entire solid electrolyte layer is in the range of 20 to 52 atomic percent.
* The P concentration in the entire solid electrolyte layer is in the range of 10 to 20 atomic percent.
* The S concentration in the entire solid electrolyte layer is in the range of 30 to 56 atomic percent.
* The O content of a portion of the solid electrolyte layer in the vicinity of the interface between the solid electrolyte layer and the positive electrode layer is 30 atomic percent or less and more preferably 15 atomic percent or less.
* The O content of a portion of the solid electrolyte layer in the vicinity of the interface between the solid electrolyte layer and the negative electrode layer is 3 atomic percent or more. It is essential to limit this content.

Here, the term "a portion of the solid electrolyte layer in the vicinity of the interface" indicates a portion of the solid electrolyte layer, the portion extending from the surface of the solid electrolyte layer in contact with the negative electrode layer to a position 1 µm or less away from the surface.

Among the foregoing four elements, in particular, O is important in ensuring the electrochemical stability of the solid electrolyte layer to metallic Li but is also a factor in reducing the Li-ion conductivity of the solid electrolyte layer. Thus, a low O content is preferably set.

The solid electrolyte layer may have a crystalline structure, an amorphous structure, or a crystal structure intermediate between a crystalline structure and an amorphous structure. A higher crystallinity of the solid electrolyte layer has a tendency to lead to a higher Li-ion conductivity. A higher degree of the amorphous phase of the solid electrolyte layer has a tendency to lead to improvement in cycle characteristics.

### (Method for Producing Electric Power Generating Element)

To produce the electric power generating element embodying the present invention, for example, metal foil, serving as a positive electrode current collector, composed of copper (Cu), nickel (Ni), iron (Fe), stainless steel (SUS), or the like is prepared. Alternatively, a component in which a metal layer is formed on an insulating base is prepared. Then the positive electrode layer, the solid electrolyte layer, and the negative electrode layer are formed, in that order, on the positive electrode current collector. Of course, the electric power generating element may be produced by preparing a negative electrode current collector and sequentially forming the negative electrode layer, the solid electrolyte layer, the positive electrode layer, and the positive electrode current collector, in that order, on the negative electrode current collector. In addition, after the preparation of the solid electrolyte layer, the positive electrode layer and the negative electrode layer may be formed on the front surface and the back surface, respectively, of the solid electrolyte layer. Alternatively, after the direct formation of the positive electrode layer, the solid electrolyte layer, and the negative electrode layer on an insulating base, current collectors may be attached to the respective electrode layers.

Here, in order to change the O content of the solid electrolyte layer in the electric power generating element embodying the present invention, a gas-phase method, for example, a vapor deposition method, a sputtering method, an ion-plating method, or a laser ablation method, is preferably employed. For example, in the case of the vapor deposition method, the O content of the solid electrolyte layer may be adjusted by using an O-containing material and an O-free material as evaporation sources and changing the evaporation rate of the O-containing material stepwise or continuously with time. Furthermore, in the case of the laser ablation method, the O content of the solid electrolyte layer may be adjusted by changing the O content in an atmospheric gas during deposition stepwise or continuously.

The gas-phase method may be employed as a means for forming the positive electrode layer and the negative electrode layer. Alternatively, the positive electrode layer may be formed by a means, such as a wet process, e.g., a sol-gel method, a colloidal method, or a casting method.

### EXAMPLES

### EXAMPLE 1

Hereinafter, electric power generating elements according to examples and comparative examples were produced. The yields of the electric power generating elements were evaluated. Each of the electric power generating elements was produced by stacking a positive electrode layer, a solid electrolyte layer, and a negative electrode layer, in that order, on a base to be formed into a positive electrode current collector. The term "yields" defined here indicates the proportions of batteries that maintained their capacities after a predetermined number of charge-discharge cycles.

### <Formation of Positive Electrode Layer>

Stainless-steel foil, which was to be formed into a current collector for a positive electrode layer, which was 100 mm × 100 mm square, and which had a thickness of 100 µm, was placed in a vacuum chamber while being fixed on a base holder composed of stainless steel. A surface of the stainless-steel foil was subjected to cleaning with an Arion beam. Next, a 1-µm-thick positive electrode layer containing LiCoO₂ that serves as a positive-electrode active material was formed on the stainless-steel foil by a laser ablation method with a KrF excimer laser. The deposition conditions were described below.

### (Deposition atmosphere): an oxygen atmosphere at a pressure of 10⁻² Pa

### (Surface temperature of base): 650°C

### (Laser): pulse irradiation at an energy density of 2 J/cm² and a repetition rate of 10 Hz

Here, a measurement sample used for measuring the thickness of the positive electrode layer was also produced when the positive electrode layer was formed. The measurement sample was produced by placing a Si substrate in the vicinity of the stainless-steel foil in the vacuum chamber and forming a layer, having the same composition as the positive electrode layer, on the Si substrate. The use of the measurement sample enables us to measure the thickness of the positive electrode layer of the electric power generating element without damaging the electric power generating element. The thickness was measured with a stylus profilometer.

### <Formation of Solid Electrolyte Layer>

The stainless-steel foil on which the positive electrode layer composed of LiCoO₂ had been formed was stamped into circular pieces each having an outside diameter of 16 mm. The circular pieces were masked with stainless-steel masks each having an opening with an outer diameter of 15 mm, thereby preparing positive electrode bases. Each of the positive electrode bases was fixed to a holder in a vacuum chamber. Then a solid electrolyte layer having a thickness of 5 µm was formed on the entire surface of each positive electrode layer by the laser ablation method with the KrF excimer laser. The solid electrolyte layers were composed of compounds represented by the formula aLi·bP·cS·dO (a + b + c + d = 1), excluding incidental impurities. Specifically, the solid electrolyte layers were deposited as described below.

As raw materials for the solid electrolyte layers, powders of lithium sulfide (Li₂S) and phosphorus pentasulfide (P₂S₅) were prepared. In a glove box filled with Ar gas having a dew point of -80°C, the raw-material powders were weighed and mixed so as to achieve desired compositions of Li, P, and S. The resulting mixtures were formed into pellet-like target materials. Each of the target materials were transferred into a vacuum chamber while not being exposed to air. The positive electrode bases were fixed to a holder in the chamber. The solid electrolyte layers each having a thickness of 5 µm were formed on the positive electrode layers of the positive electrode bases by the laser ablation method with the KrF excimer laser. After the formation of the solid electrolyte layers, the base temperature was raised to 225°C, and the temperature was held for 300 seconds. The deposition conditions were described below. The solid electrolytes had a glass transition temperature of about 250°C.

### (Deposition atmosphere): in an Ar gas-based atmosphere having a total pressure of 10⁻¹ Pa, the partial pressure of O₂ gas was stepwise reduced in the range of 10⁻¹ Pa to 0 Pa.

### (Temperature of positive electrode base): unheated

### (Laser): pulse irradiation at an energy density of 2 J/cm² and a repetition rate of 10 Hz

Here, measurement samples used for measuring the Li-ion conductivities (S/cm) and compositions of the solid electrolyte layers were also produced when the solid electrolyte layers were formed. Each of the measurement samples was produced by placing a glass substrate in the vicinity of a corresponding oneof the positive electrode bases in the vacuum chamber and forming the solid electrolyte layers on the glass substrate. The Li-ion conductivities were determined by forming comb-shaped Au electrodes on the measurement samples and performing measurement by a complex impedance measurement method. The composition of each solid electrolyte layer in the thickness direction was analyzed by XPS with an ESCA 5400MC manufactured by ULVAC-PHI, Incorporated. Tables I and II described below show compositions at positions 10 nm from interfaces between the solid electrolyte layers and the positive electrode layers, and show compositions at positions 10 nm from interfaces between the solid electrolyte layers and the negative electrode layers.

### <Formation of Negative Electrode Layer>

Next, the surfaces of the solid electrolyte layers were masked with stainless-steel masks each having an opening with an outside diameter of 14 mm. Each of the masked solid electrolyte layers was fixed to a holder in a vacuum chamber. Negative electrode layers each having an outside diameter of 10 mm and a thickness of 1 µm and being composed of metallic Li were formed by vapor deposition method on the respective solid electrolyte layers at a degree of vacuum of 10⁻⁴ Pa, thereby completing electric power generating elements.

Measurement samples for measuring the thicknesses of the negative electrode layers were also produced. Each of the measurement samples was produced by forming a negative electrode layer on a stainless-steel substrate arranged in the vacuum chamber. The thicknesses of the negative electrode layers were determined by inductively coupled plasma emission spectrometry (ICP).

### <Finish>

The electric power generating elements produced as described above were incorporated into coin-type battery containers in a glove box filled with an Ar gas atmosphere with a dew point of -80°C, thereby producing nonaqueous electrolyte batteries. Twenty batteries including the same electric power generating elements were produced for each composition.

### <Test and Evaluation>

First, all the resulting batteries were determined to have an open-circuit voltage (OCV) of 3 V or more. In addition, it was determined that after the batteries were charged and allowed to stand for 24 hours, in each of the batteries, no voltage drop occurred, no short circuit occurred between the positive electrode layer and the negative electrode layer, and electron conductivity attributed to the reductive decomposition of the solid electrolyte layer was not provided.

A charge-discharge cycle test was performed on each of the batteries at a constant current of 0.4 mA (10 C), a charge cut-off voltage of 4.2 V, and a discharge cut-off voltage of 3 V. Among 20 batteries including the same electric power generating elements, the proportion of batteries having a capacity retention rate of 80% or more (i.e., the yield of acceptable products) after 1000 cycles of the charge-discharge operations was studied. Furthermore, the specific capacities (mAh/g) of the batteries were calculated from data obtained by the charge-discharge test. Tables I and II show the results and the compositions of the solid electrolyte layers of the electric power generating elements.

**[Table 1]**

| Sample | Solid electrolyte layer of electric power generating element | | | | | | | | | Nonaqueous electrolyte battery | |
|---|---|---|---|---|---|---|---|---|---|---|---|
| | Vicinity of interface on positive electrode side (aLi · bP · cS · d0) | | | | Vicinity of interface on negative electrode side (aLi · bP · cS · d0) | | | | Li-ion conductivity (S/cm) | Specific capacity at 10 C (mAh/g) | Yield of acceptable product (%) |
| | a | b | c | d | a | b | c | d | | | |
| 1 | 0.17 | 0.21 | 0.61 | 0.01 | 0.18 | 0.21 | 0.61 | 0.00 | 7 × 10⁻⁵ | 118 | 5 |
| 2 | 0.21 | 0.20 | 0.55 | 0.04 | 0.21 | 0.20 | 0.56 | 0.03 | 9 × 10⁻⁵ | 119 | 85 |
| 3 | 0.27 | 0.17 | 0.49 | 0.07 | 0.27 | 0.17 | 0.51 | 0.05 | 1 × 10⁻⁴ | 119 | 100 |
| 4 | 0.30 | 0.16 | 0.44 | 0.10 | 0.32 | 0.15 | 0.45 | 0.08 | 1 × 10⁻⁴ | 119 | 90 |
| 5 | 0.40 | 0.12 | 0.31 | 0.17 | 0.41 | 0.11 | 0.33 | 0.15 | 9 × 10⁻⁵ | 119 | 90 |
| 6 | 0.44 | 0.10 | 0.37 | 0.09 | 0.44 | 0.10 | 0.38 | 0.08 | 1 × 10⁻⁴ | 119 | 90 |
| 7 | 0.48 | 0.08 | 0.34 | 0.10 | 0.48 | 0.08 | 0.35 | 0.09 | 5 × 10⁻⁶ | 75 | 80 |
| 8 | 0.31 | 0.15 | 0.45 | 0.09 | 0.30 | 0.16 | 0.53 | 0.02 | 2 × 10⁻⁴ | 119 | 30 |
| 9 | 0.20 | 0.20 | 0.58 | 0.02 | 0.20 | 0.20 | 0.59 | 0.01 | 9 × 10⁻⁵ | 119 | 10 |
| 10 | 0.20 | 0.20 | 0.54 | 0.06 | 0.20 | 0.20 | 0.55 | 0.05 | 7 × 10⁻⁵ | 118 | 80 |
| 11 | 0.20 | 0.20 | 0.40 | 0.20 | 0.20 | 0.20 | 0.42 | 0.18 | 2 × 10⁻⁵ | 110 | 75 |
| 12 | 0.20 | 0.20 | 0.30 | 0.30 | 0.20 | 0.20 | 0.32 | 0.28 | 1 × 10⁻⁵ | 108 | 70 |
| 13 | 0.20 | 0.20 | 0.28 | 0.32 | 0.20 | 0.20 | 0.29 | 0.31 | 1 × 10⁻⁶ | <50 | 70 |
| 14 | 0.26 | 0.15 | 0.55 | 0.04 | Chemical composition identical to that shown on the left | | | | 2 × 10⁻⁴ | 119 | 50 |
| 15 | 0.31 | 0.15 | 0.45 | 0.09 | 0.31 | 0.15 | 0.48 | 0.06 | 2 × 10⁻⁴ | 119 | 90 |

**[Table II]**

| Sample | Solid electrolyte layer of electric power generating element | | | | | | | | | Nonaqueous electrolyte battery | |
|---|---|---|---|---|---|---|---|---|---|---|---|
| | Vicinity of interface on positive electrode side (aLi · bP · cS · d0) | | | | Vicinity of interface on negative electrode side (aLi · bP · cS · d0) | | | | Li-ion conductivity (S/cm) | Specific capacity at 10 C (mAh/g) | Yield of acceptable product (%) |
| | a | b | c | d | a | b | c | d | | | |
| 16 | 0.29 | 0.16 | 0.53 | 0.02 | 0.25 | 0.18 | 0.48 | 0.09 | 1 × 10⁻⁴ | 119 | 40 |
| 17 | 0.17 | 0.21 | 0.60 | 0.02 | 0.18 | 0.21 | 0.60 | 0.01 | 8 × 10⁻⁵ | 119 | 10 |
| 18 | 0.21 | 0.20 | 0.55 | 0.04 | 0.21 | 0.20 | 0.56 | 0.03 | 9 × 10⁻⁵ | 119 | 90 |
| 19 | 0.25 | 0.18 | 0.50 | 0.07 | 0.26 | 0.17 | 0.51 | 0.06 | 9 × 10⁻⁵ | 119 | 100 |
| 20 | 0.30 | 0.16 | 0.44 | 0.10 | 0.32 | 0.15 | 0.45 | 0.08 | 1 × 10⁻⁴ | 119 | 95 |
| 21 | 0.39 | 0.12 | 0.32 | 0.17 | 0.41 | 0.11 | 0.33 | 0.15 | 9 × 10⁻⁵ | 119 | 80 |
| 22 | 0.46 | 0.09 | 0.35 | 0.10 | 0.46 | 0.09 | 0.37 | 0.08 | 7 × 10⁻⁶ | 90 | 55 |
| 23 | 0.31 | 0.15 | 0.45 | 0.09 | 0.31 | 0.15 | 0.52 | 0.02 | 2 × 10⁻⁴ | 119 | 30 |
| 24 | 0.31 | 0.15 | 0.52 | 0.02 | 0.34 | 0.14 | 0.51 | 0.01 | 4 × 10⁻⁴ | 120 | 10 |
| 25 | 0.31 | 0.15 | 0.48 | 0.06 | 0.34 | 0.14 | 0.47 | 0.05 | 2.5 × 10⁻⁴ | 120 | 85 |
| 26 | 0.31 | 0.15 | 0.34 | 0.20 | 0.34 | 0.14 | 0.34 | 0.18 | 6 × 10⁻⁵ | 118 | 80 |
| 27 | 0.31 | 0.15 | 0.22 | 0.32 | 0.34 | 0.14 | 0.24 | 0.28 | 1 × 10⁻⁵ | 108 | 70 |
| 28 | 0.31 | 0.15 | 0.22 | 0.32 | 0.34 | 0.14 | 0.20 | 0.32 | 1.5 × 10⁻⁶ | <50 | 40 |
| 29 | 0.31 | 0.15 | 0.44 | 0.10 | 0.31 | 0.15 | 0.48 | 0.06 | 1.5 × 10⁻⁴ | 119 | 95 |
| 30 | 0.31 | 0.15 | 0.44 | 0.10 | 0.31 | 0.15 | 0.35 | 0.19 | 1 × 10⁻⁴ | 119 | 45 |

Tables I and II show that for samples in which the O content of each of the solid electrolyte layers was reduced from the corresponding positive electrode layer side to the corresponding negative electrode layer side and in which a portion of each solid electrolyte layer adjacent to the corresponding negative electrode layer had an O content of 3 atomic percent or more, the yields of acceptable products exceeded 50%. Furthermore, it was found that lower O contents of portions of the solid electrolyte layers adjacent to the respective positive electrode layers resulted in improvement in the yields of acceptable products. In contrast, the yields in the following samples were 50% or less: samples 14 and 28 in which each of the solid electrolyte layers had a uniform O content, samples 16 and 30 in which the O content of each solid electrolyte layer was reduced from the corresponding negative electrode layer side to the corresponding positive electrode layer side, and samples 1, 8, 9, 17, 23, and 24 in which the portion of each solid electrolyte layer adjacent to the corresponding negative electrode layer had an O content of less than 3 atomic percent.

Furthermore, the solid electrolyte layers each having a Li concentration of 20 to 52 atomic percent, a P concentration of 10 to 20 atomic percent, and a S concentration of 30 to 56 atomic percent had excellent Li-ion conductivity. The batteries including the solid electrolyte layers had excellent specific capacities because of the Li-ion conductivities of the solid electrolyte layers.

### EXAMPLE 2

With respect to electric power generating elements including solid electrolyte layers having different crystalline states, the specific capacities at 10 C and the yields of acceptable products were studied. Furthermore, the Li-ion conductivities of the solid electrolyte layers of the electric power generating elements were also studied.

### <Production of Sample>

### (Sample 29)

Sample 29 of Example 1 was produced. When the solid electrolyte layer of sample 29 was formed, the solid electrolyte layer was subjected to heat treatment at 225°C. Thus, the solid electrolyte layer was probably crystalline.

### (Sample 31)

Sample 31 was produced as in sample 29, except for the following difference.

Difference: the heat treatment after the formation of the solid electrolyte layer on the positive electrode layer was performed at 100°C for 30 minutes.

### (Sample 32)

Sample 32 was produced as in sample 29, except for the following difference.

Difference: the heat treatment after the formation of the solid electrolyte layer on the positive electrode layer was not performed.

### <Determination of Crystal State>

The solid electrolyte layers of samples 31, 32, and 29 were subjected to X-ray diffraction measurement using Cu-Kα radiation as an X-ray source under an Ar gas atmosphere with a dew point of -90°C.

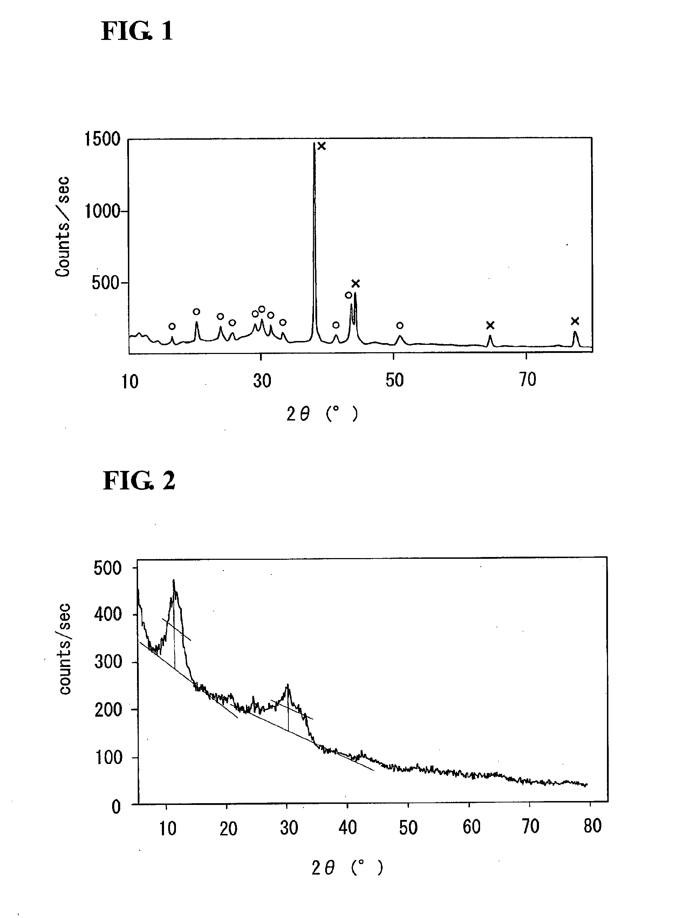

The measurement results demonstrated the following: the X-ray diffraction pattern of the solid electrolyte layer of sample 29 illustrated in Fig. 1 indicates that peaks are located at 20 = 16.7±0.25°, 20.4±0.25°, 23.8±0.25°, 25.9±0.25°, 29.4±0.25°, 30.4±0.25°, 31.7±0.25°, 33.5±0.25°, 41.5±0.25°, 43.7±0.25°, and 51.2±0.25° and that each of the peaks has a half-width of 0.5° or less. The results demonstrated that the solid electrolyte layer of sample 29 had a crystalline structure. In Fig. 1, the symbols (o) represent the diffraction peaks from the solid electrolyte layer. The symbols (x) represent the diffraction peaks from a component other than the solid electrolyte layer.

The measurement results also demonstrated the following: the X-ray diffraction pattern of the solid electrolyte layer of sample 31 illustrated in Fig. 2 indicates that peaks are located at 2θ = about 11° and about 30° and that each of the peaks has a half-width of 10° or less. The results demonstrated that the solid electrolyte layer of sample 31 had a crystal structure intermediate between a crystalline structure and the amorphous structure.

Furthermore, the measurement results demonstrated that in the X-ray diffraction pattern of the solid electrolyte layer of sample 32, no peak is present (not illustrated). This demonstrated that the solid electrolyte layer of sample 32 was amorphous.

### <Measurement of Characteristics of Electric Power Generating Element>

The characteristics of the electric power generating elements were measured as in Example 1. Table III shows the evaluation results of the characteristics.

**[Table III]**

| Sample | Solid electrolyte layer | Nonaqueous electrolyte battery | |
|---|---|---|---|
| | Li-ion conductivity (S/cm) | Specific capacity at 10 C (mAh/g) | Yield of acceptable product (%) |
| 29 | 1.5 × 10⁻⁴ | 119 | 95 |
| 31 | 1 × 10⁻⁴ | 119 | 90 |
| 32 | 7 × 10⁻⁵ | 118 | 85 |

### <Evaluation>

The results shown in Table III demonstrated that regardless of whether each of the solid electrolyte layers included in the electric power generating element had the crystalline structure, the amorphous structure, or the crystal structure intermediate between a crystalline structure and an amorphous structure, the electric power generating elements had excellent specific capacities and provided excellent yields of acceptable products compared with those of the related art.

### Industrial Applicability

The electric power generating element emboyding the present invention and the nonaqueous electrolyte battery are suitably usable for power supplies used in portable devices.

## Claims

1. An electric power generating element for an non-aqueous electrolyte battery which is charged and discharged by moving lithium ions between a positive electrode layer, and a negative electrode layer, the power generating element comprising said positive and negative electrode layers and a solid electrolyte layer arranged between these electrode layers, the solid electrolyte layer containing Li, P, S, and O,
**characterised in that** the O content of the solid electrolyte layer is set so as to be reduced stepwise or continuously from the positive electrode layer side to the negative electrode layer side, and
a portion of the solid electrolyte layer, extending from the surface of the solid electrolyte layer in contact with the negative electrode layer to a position 1µm or less away from the surface, has an O content of 3 atomic percent or more.

2. The electric power generating element according to Claim 1, wherein said portion of the solid electrolyte layer has an O content of 30 atomic percent or less.

3. The electric power generating element according to Claim 2, wherein said portion of the solid electrolyte layer has an O content of 15 atomic percent or less.

4. The electric power generating element according to any one of Claims 1 to 3,
wherein the solid electrolyte layer has
a Li concentration of 20 to 52 atomic percent,
a P concentration of 10 to 20 atomic percent, and
a S concentration of 30 to 56 atomic percent.

5. The electric power generating element according to any one of Claims 1 to 4, wherein main peaks in the X-ray diffraction pattern of the solid electrolyte layer using Cu-Kα radiation are located at 16.7±0.25°, 20.4±0.25°, 23.8±0.25°, 25.9±0.25°, 29.4±0.25°, 30.4±0.25°, 31.7±0.25°, 33.5±0.25°, 41.5±0.25°, 43.7±0.25°, and 51.2±0.25° in terms of 2θ, and each of the peaks has a half-width of 0.5° or less.

6. The electric power generating element according to any one of Claims 1 to 4, wherein main peaks in the X-ray diffraction pattern of the solid electrolyte layer using Cu-Kα radiation are located at about 11° and about 30° in terms of 2θ, and each of the peaks has a half-width of 10° or less.

7. The electric power generating element according to any one of Claims 1 to 4, wherein the solid electrolyte layer is amorphous, and wherein the X-ray diffraction pattern of the solid electrolyte layer using Cu-Kα radiation does not show any clear peak.

8. A nonaqueous electrolyte battery comprising the electric power generating element according to any one of Claims 1 to 7.

## Patentansprüche

1. Element zur Erzeugung von Elektrizität für eine nichtwässrige Elektrolytbatterie, die durch Bewegung der Lithium-Ionen zwischen einer positiven Elektrodenschicht und einer negativen Elektrodenschicht geladen und entladen wird, wobei das Element zur Erzeugung von Elektrizität die positive und die negative Elektrodenschichten und eine Festelektrolytschicht umfasst, die zwischen diesen Elektrodenschichten angeordnet ist, und die Festelektrolytschicht Li, P, S und O umfasst,
**dadurch gekennzeichnet dass** der O-Gehalt der Festelektrolytschicht so eingestellt ist, dass dieser von der Seite der positiven Elektrodenschicht zu der Seite der negativen Elektrodenschicht schrittweise oder kontinuierlich reduziert ist, und
ein Teil der Festelektrolytschicht, der sich von der Oberfläche der Festelektrolytschicht in Kontakt mit der negativen Elektrodenschicht bis zu einer Position, die 1 µm oder weniger von der Oberfläche entfernt ist, erstreckt, einen O-Gehalt von 3 Atomprozent oder mehr hat.

2. Element zur Erzeugung von Elektrizität nach Anspruch 1, in dem der Teil der Festelektrolytschicht einen O-Gehalt von 30 Atomprozent oder weniger hat.

3. Element zur Erzeugung von Elektrizität nach Anspruch 2, in dem der Teil der Festelektrolytschicht einen O-Gehalt von 15 Atomprozent oder weniger hat.

4. Element zur Erzeugung von Elektrizität nach einem der Ansprüche 1 bis 3, in dem die Festelektrolytschicht eine Li-Konzentration von 20 bis 52 Atomprozent, eine P-Konzentration von 10 bis 20 Atomprozent, und eine S-Konzentration von 30 bis 56 Atomprozent hat.

5. Element zur Erzeugung von Elektrizität nach einem der Ansprüche 1 bis 4, in dem Hauptpeaks in dem Röntgenbeugungsdiagramm der Festelektrolytschicht unter Verwendung von Cu-Kα-Strahlung bei 16,7±0.25°, 20.4±0.25°, 23,8±0,25°, 25,9±0,25°, 29,4±0,25°, 30,4±0,25°, 31,7±0,25°, 33,5±0,25°, 41,5±0,25°, 43,7±0,25° und 51,2±0,25° in Einheiten von 2Θ liegen, und jeder der Peaks eine Halbwertsbreite von 0,5° oder weniger hat.

6. Element zur Erzeugung von Elektrizität nach einem der Ansprüche 1 bis 4, in dem Hauptpeaks in dem Röntgenbeugungsdiagramm der Festelektrolytschicht unter Verwendung von Cu-Kα-Strahlung bei etwa 11° und etwa 30° in Einheiten von 2Θ liegen, und jeder der Peaks eine Halbwertsbreite von 10° oder weniger hat.

7. Element zur Erzeugung von Elektrizität nach einem der Ansprüche 1 bis 4, in dem die Festelektrolytschicht amorph ist, und in dem das Röntgenbeugungsdiagramm der Festelektrolytschicht unter Verwendung von Cu-Kα-Strahlung keinen deutlichen Peak aufweist.

8. Nichtwässrige Elektrolytbatterie, die das Element zur Erzeugung von Elektrizität nach einem der Ansprüche 1 bis 7 umfasst.

## Revendications

1. Élément de génération d'électricité pour une batterie d'électrolyte non aqueux qui est chargé et déchargé en déplaçant des ions lithium entre une couche d'électrode positive, et une couche d'électrode négative, l'élément de génération d'électricité comprenant lesdites couches d'électrode positive et négative et une couche d'électrolyte solide agencée entre ces couches d'électrode, la couche d'électrolyte solide contenant Li, P, S, et O,
**caractérisé en ce que** la teneur en O de la couche d'électrolyte solide est définie de manière à être réduite de façon incrémentielle ou continue du côté de la couche d'électrode positive vers le côté de la couche d'électrode négative, et
une partie de la couche d'électrolyte solide, s'étendant de la surface de la couche d'électrolyte solide en contact avec l'électrode négative à une position à une distance de 1 µm ou moins de la surface, a une teneur en O de 3 pour cent atomique ou plus.

2. Élément de génération d'électricité selon la revendication 1, dans lequel ladite partie de la couche d'électrolyte solide a une teneur en O de 30 pour cent atomique ou moins.

3. Élément de génération d'électricité selon la revendication 2, dans lequel ladite partie de la couche d'électrolyte solide a une teneur en O de 15 pour cent atomique ou moins.

4. Élément de génération d'électricité selon l'une quelconque des revendications 1 à 3, dans lequel la couche d'électrolyte solide a
une concentration de Li de 20 à 52 pour cent atomique,
une concentration de P de 10 à 20 pour cent atomique, et
une concentration de S de 30 à 56 pour cent atomique.

5. Élément de génération d'électricité selon l'une quelconque des revendications 1 à 4, dans lequel les pics principaux dans le profil de diffraction des rayons X de la couche d'électrolyte solide en utilisant le rayonnement Cu-Kα sont situés à 16,7 ± 0,25°, 20,4 ± 0,25°, 23,8 ± 0,25°, 25,9 ± 0,25°, 29,4 ± 0,25°, 30,4 ± 0,25°, 31,7 ± 0,25°, 33,5 ± 0,25°, 41,5 ± 0,25°, 43,7 ± 0,25°, et 51,2 ± 0,25° en termes de 2θ, et chacun des pics a une largeur à mi-hauteur de 0,5° ou moins.

6. Élément de génération d'électricité selon l'une quelconque des revendications 1 à 4, dans lequel les pics principaux dans le profil de diffraction des rayons X de la couche d'électrolyte solide en utilisant le rayonnement Cu-Kα sont situés à environ 11° et environ 30° en termes de 2θ, et chacun des pics a une largeur à mi-hauteur de 10° ou moins.

7. Élément de génération d'électricité selon l'une quelconque des revendications 1 à 4, dans lequel la couche d'électrolyte solide est amorphe, et dans lequel le profil de diffraction des rayons X de la couche d'électrolyte solide en utilisant le rayonnement Cu-Kα ne présente aucun pic net.

8. Batterie à électrolyte non aqueux comprenant l'élément de génération d'électricité selon l'une quelconque des revendications 1 à 7.
